# EUROPEAN PATENT SPECIFICATION

(11) **EP 0 348 991 B1**
(45) Date of publication and mention of the grant of the patent: **15.06.1994**
(21) Application number: 89111919.0
(22) Date of filing: 30.06.1989
(51) Int. Cl.: G21C 19/42

(54) **Method for evaporation treatment of ruthenium-containing nitric acid solution**
Verfahren zur Verdampfungsbehandlung einer Ruthenium enthaltenden Salpetersäurelösung
Procédé pour traitement d'évaporation d'une solution d'acide nitrique contenant le ruthénium

(30) Priority: 01.07.1988 JP 162551/88
(43) Date of publication of application: 03.01.1990
(73) Proprietor: HITACHI, LTD., Chiyoda-ku, Tokyo 101 (JP)
(72) Inventor: Hirose, Yasuo, Hitachi-shi (JP)
(74) Representative: Beetz & Partner Patentanwälte

(56) References cited:
- DE-A- 2 125 915
- GB-A- 1 301 375
- GB-A- 1 362 410
- US-A- 4 313 845
- US-A- 4 349 453

## Description

The present invention relates to a method for evaporation of nitric acid solution containing nuclear fission products in the chemical reprocessing of spent nuclear fuel and in particular to a method for evaporation of ruthenium-containing nitric acid solution which is suitable for preventing volatilization of radioactive ruthenium and inhibition of corrosion of evaporation apparatus.

It has been known that probability of production of ruthenium upon nuclear fission of uranium-235 in the presence of thermal neutrons is 22.5% and that of production of plutonium-239 is 46.5%.

Isotopes of ruthenium produced by nuclear fission include those of from 98 to 109 in atomic mass, but those of 105, 107, 108 and 109 in mass number are isotopes of short life and cannot substantially be present at the time of reprocessing of spent nuclear fuel.

Radioactive ruthenium isotopes which may pose problems are those of atomic mass 103 (half life = 39.2 days) and atomic mass 106 (half life = 368 days) and the rest are stable isotopes.

Weight of ruthenium contained in representative spent fuel in a furnace at the time of reprocessing (4 years after being taken out from a nuclear reactor) is about 6.5% of total nuclear fission products, but ratio of radioactivity is about 12%.

According to the Purex process which is the most widely used reprocessing technique at present, uranium and plutonium are solvent-extracted from a nitric acid solution of spent fuel with a mixture of tributylphosphoric acid and dodecane, and the nitric acid solution containing fission products is subjected to evaporation treatment to recover the nitric acid for reuse and the concentrated solution of the fission products after the evaporation treatment is as a rule stored.

It is known that volatilization of ruthenium during evaporation and concentration of nitric acid solution containing fission products depends on the concentration of nitric acid distilled off from the evaporator. In the usual case where nitric acid concentration in distillate is 2 or 3 N, ruthenium concentration in the distillate with evaporation under atmospheric pressure without adopting any means to inhibit volatilization of ruthenium is approximately 1/100 to 1/10 of the concentration in the solution in the evaporator. Reaction of dissolution of spent fuel in nitric acid in reprocessing of spent fuel is shown by the following formula:

UO₂ + 3HNO₃ → UO₂(NO₃)₂ + 1/2NO + 1/2NO₂ + 3/2H₂O

Thus, 22.4 liters of nitrogen oxide is produced when 270 g of uranium dioxide is dissolved. It is known that about 0.5 g of ruthenium present in 270 g of fuel is dissolved in nitric acid and simultaneously affected by nitrogen oxide and free nitric acid to produce a nitrosyl ruthenium complex compound represented by the formula:

[RuNO(NO₃)ₓ(NO₂)_{y}(OH)_{z}-(H₂O)_{5-x-y-z}]^{3-2-y-z}

Similar reaction is also seen when a nitric acid solution containing ruthenium ions is reacted with nitrogen oxide, nitrous acid or a nitrite under heating.

The above nitrosyl ruthenium complex compound tends to decrease in coordination number of nitro group (NO₂) and hydroxyl group (OH) in a nitric acid solution containing no nitrous acid and most of the ruthenium in a nitric acid solution which has been left to stand is converted to a nitrosyl ruthenium·nitrato complex which coordinates only nitrato group (NO₃) and water (H₂O). When nitrosyl ruthenium·nitrato complex is heated in a concentrated nitric acid, it is oxidized and decomposed and further oxidation produces volatile ruthenium tetraoxide. When this ruthenium tetraoxide volatilizes together with nitric acid vapor, the decontamination coefficient of the evaporation apparatus decreases.

A conventional method for inhibiting volatilization of ruthenium tetraoxide comprises shortening the average heating time of the solution in an evaporation apparatus in the evaporation treatment of nitric acid containing ruthenium as disclosed in Japanese Patent Kokai No. 61-260196. This procedure aims at improving the decontamination factor for ruthenium and corrosion resistance of the materials constituting the evaporation apparatus. Furthermore, it is considered that in this conventional method, the above effect to inhibit volatilization is improved by keeping the solution at a temperature lower than the boiling point thereof under normal pressures or by converting ruthenium ions in the nitric acid solution to a nitrosyl ruthenium complex compound prior to the evaporation treatment.

However, this method is subject to shortening of the average heating time and so requires use of a special evaporation apparatus such as a thin-film type evaporation apparatus. That is, this method has no relation in its application to general evaporation apparatuses such as a pot-type evaporation apparatus.

As another conventional technique, the "Journal of Chemical Engineering Data", Vol. 5, No. 4, 1960, p. 521-524 shows that in evaporation of a nitric acid solution containing ruthenium, the volatile coefficient of ruthenium which is a ratio of concentration of ruthenium contained in vapor to concentration of ruthenium in the solution in the evaporation can is decreased from the level of 10⁻² to the level of 10⁻⁵ by filling the evaporation apparatus with nitrogen dioxide under atmospheric pressure and thus volatilization of ruthenium can be restrained.

Furthermore, Japanese Patent Kokai No. 60-46380 discloses a method for preventing corrosion of an apparatus which deals with a nitric acid solution containing a heavy metal and/or a compound thereof wherein the effect to prevent the corrosion is enhanced by forcedly adding NOx gas to the nitric acid solution.

These conventional techniques show that if nitrogen oxide gas is blown into an evaporation apparatus for nitric acid containing ruthenium, it is possible to inhibit volatilization of ruthenium as well as to prevent corrosion of stainless steels. However, according to these conventional techniques, as mentioned in Japanese Patent Kokai No. 60-46380, the amount of NOx gas necessary for corrosion prevention cannot be simply specified and basically is said to be such an amount necessary to change the corrosion potential of stainless steel present in transpassive state to passive state and thus it is not definitely based on the chemical behavior of ruthenium in nitric acid.

### SUMMARY OF THE INVENTION

The object of the present invention is to provide a method for evaporation of ruthenium-containing nitric acid waste solution according to which volatilization of ruthenium can be inhibited not depending on the kind of evaporation apparatus
The above object can be attained by converting the ruthenium ion in nitric acid not to the general nitrosyl ruthenium complex compound, but to a nitrosyl ruthenium complex compound in which nitro group (NO₂) is coordinated prior to evaporation treatment. That is, it can be attained by a method for evaporation of ruthenium-containing nitric acid solution by carrying out evaporation with heating with successively supplying the ruthenium-containing nitric acid solution to be evaporated to an evaporation apparatus wherein chemical form of ruthenium contained in the solution to be evaporated is partly or totally converted to a nitrosyl complex in which a nitro group is coordinated and thereafter, carrying out evaporation treatment by successively supplying the solution to the evaporation apparatus.

The present invention is based on the phenomenon that reaction of ruthenium ions and nitrosyl ruthenium·nitrato complex with nitrogen oxide or nitrous acid in nitric acid solution results in conversion to a nitro group-coordinated nitrosyl ruthenium complex compound.

It is known that conversion rate to the nitro group-coordinated nitrosyl ruthenium complex compound increases with increase in temperature of solution and concentration of nitrous acid, but since with increase in temperature of the solution and concentration of nitric acid or nitrate, decomposition rate of the resulting complex also increases, the conversion degree decreases. Furthermore, prevention of nitric acid solution from contacting with the components of air, especially oxygen, is effective for increasing the conversion rate and conversion percentage of a ruthenium compound to a nitro group-coordinated nitrosyl ruthenium complex compound.

When a nitric acid solution in which ruthenium is partly or totally converted to a nitro group-coordinated nitrosyl ruthenium complex compound is supplied to an evaporation apparatus in an evaporation operation, the nitro group coordinated in the nitrosyl ruthenium complex compound is replaced with nitrato group and there is the effect that in the course of the replacement the oxidation-reduction potential of the nitric acid is kept at a low value during continuation of release of nitro group. Therefore, during this period, oxidation decomposition of ruthenium nitrosyl·nitrato complex and oxidation thereof into ruthenium tetraoxide as a final product are inhibited.

Thus, basic action of technical means employed by the present invention is that a nitric acid solution containing ruthenium nitrosyl compound which has been converted to one in which nitro group has been previously coordinated is supplied to the feed solution and thus ruthenium nitrosyl·nitro complex is allowed to be always present in a concentration higher than a certain level in the solution supplied, to thereby inhibit volatilization of ruthenium.

The successive supply herein used means continuous or intermittent supply.

### BRIEF DESCRIPTION OF THE DRAWINGS

Fig. 1 shows construction of test apparatus relating to one example of practicing the inventive method.

Fig. 2 is a graph which shows influence of concentration of nitric acid on the proportion of nitro group-coordinated nitrosyl ruthenium complex.

### DETAILED DESCRIPTION OF THE PREFERRED EMBODIMENT

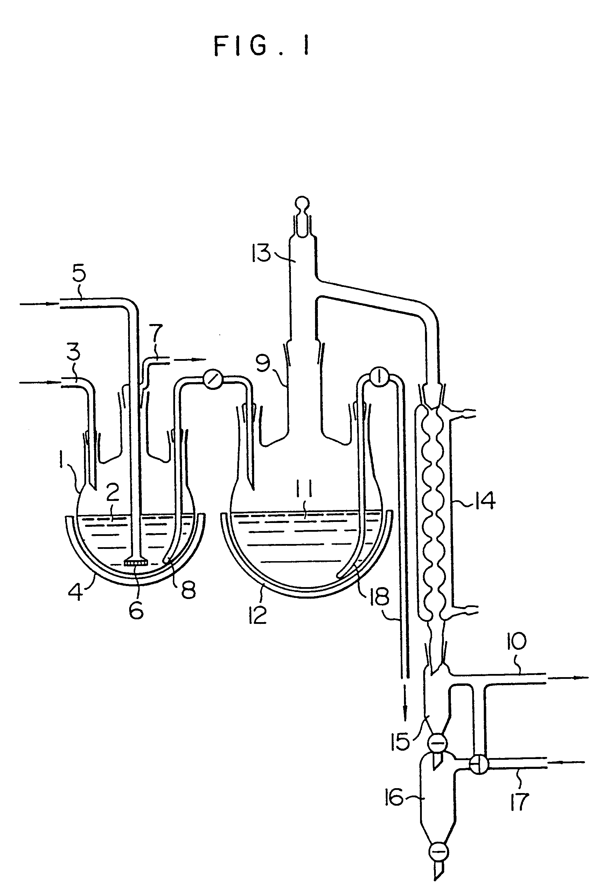

One example of the present invention will be explained referring to Fig. 1.

Nitric acid solution 2 containing ruthenium is supplied to vessel 1 through solution supply pipe 3. The nitric acid solution is heated at a constant temperature by heater 4. Nitrogen oxide gas is introduced into the vessel through introduction pipe 5. The number 6 indicates a porous plate which disperses nitrogen oxide gas as minute bubbles in the nitric acid solution to promote vapor-liquid contact. Excess nitrogen oxide gas is discharged through discharge pipe 7. The number 8 indicates a transfer pipe which is used for transfer of the nitric acid solution in vessel 1 to evaporation pot 9. Inside of evaporation pot 9 is kept at reduced pressure by exhaust pipe 10 and concentrated solution 11 is heated by heater 12 and kept at boiling point under reduced pressure. Nitric acid vapor generated by boiling of concentrated solution 11 is passed through fractionating pipe 13, is liquefied in condenser 14, enters upper reservoir 15 and is transferred to lower reservoir 16 by operation of valve. Thereafter, inside of the lower reservoir is kept at atmospheric pressure by introducing air from air supply pipe 17 and then the distillate is taken out. This apparatus is constructed so that evaporation of the concentrated solution in evaporation pot 9 is continued until concentration in terms of salt reaches a given value, then air is introduced into the evaporation pot from air supply pipe 17 to keep atmospheric pressure therein, and then the concentrated solution is taken out by drawing pipe 18.

The nitric acid solution to be evaporated which was used in this example was one which had been used for dissolving a spent nuclear fuel mostly comprising uranium dioxide and was one which was a residue solution resulting from extraction and removal of most of uranium and plutonium with a mixture of tributylphosphoric acid and normal dodecane from the resulting solution. Concentration of the nitric acid solution was 3 N and metal concentration was 6 g/l in which concentration of ruthenium was 0.2 g/l.

In this example, before starting the evaporation operation, vessel 1 was filled with 1 liter of nitric acid solution and evaporation pot 9 was filled with 2 liters of nitric acid solution, and inside of the evaporation pot was kept at a reduced pressure of 266 hPa (200 mmHg) and thereafter evaporation treatment was started. The evaporation treatment was carried out at a constant rate of 200 ml/h and simultaneously nitric acid solution in an amount equal to the evaporation amount was supplied to vessel 1 from introduction pipe 5 and the same amount of nitric acid was supplied to evaporation pot 9 from vessel 1. Concentration of metallic elements contained in the concentrated nitric acid solution in evaporation pot 9 linearly increased with lapse of evaporation time and after lapse of 210 hours, the metal concentration reached 120 g/l in which ruthenium concentration was 4 g/l and nitric acid concentration reached 8 N.

The effects of the present invention were compared and confirmed by the following two methods.

According to the first method, nitric acid solution supplied to vessel 1 was transferred as it was to evaporation pot 9. In this case, 2 mg/l of ruthenium was detected in the nitric acid solution evaporated from evaporation pot 9 and recovered from lower reservoir 16.

On the other hand, according to the method where 1 l/h of nitrogen monoxide was blown into the whole of the nitric acid solution entering evaporation pot 9 from vessel 1 while it was present in vessel 1 kept at 65°C, only 0.2 mg/l of ruthenium was detected in the recovered nitric acid solution. From these results, it can be seen that blowing nitrogen monoxide into the solution to be evaporated reduces the amount of ruthenium volatilized in the evaporated solution.

When the blowing rate of nitrogen monoxide was reduced to 0.1 l/h under the same conditions, the amount of ruthenium detected in the recovered nitric acid was also 0.2 mg/l, but when the rate was reduced to 0.01 l/h, the amount of ruthenium was 1 mg/l.

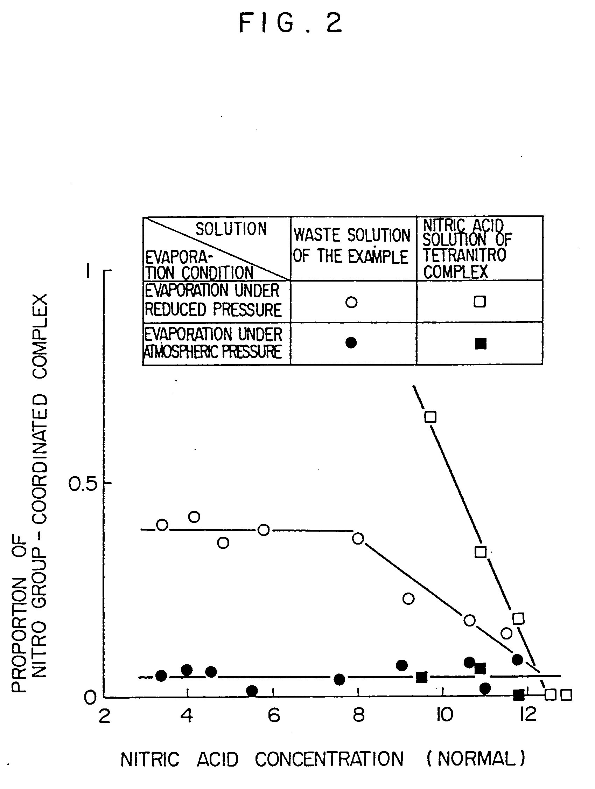

It has been found that in this example, ruthenium in the nitric acid solution into which nitrogen monoxide has been blown gradually releases nitrogen monoxide under heating as compared with ruthenium in the nitric acid solution into which no nitrogen monoxide has been blown. The amount of nitrogen monoxide released does not exceed 1 gram mol per 1 gram mol of ruthenium and chemical reaction which may take place here can be presumed as follows: 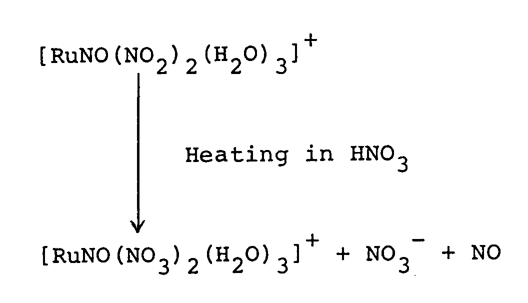
In this example, when nitric acid solution saturated with nitrogen monoxide was continuously supplied to boiling concentrated solution under a reduced pressure of 266 hPa (200 mmHg), potential shown by a platinum electrode dipped in the boiling concentrated solution relative to silver-silver chloride standard potential did not exceed 1080 mV while it reached 1180 mV when the nitric acid was supplied as it was. When nitrogen monoxide was blown into 8N nitric acid solution at 80°C which contained other metals as in the example, but did not contain ruthenium, potential shown by the platinum electrode lowered to 100 mV as compared with before blowing of nitrogen monoxide thereto, but when blowing was discontinued, it immediately returned to the original potential. On the other hand, when ruthenium was present in the nitric acid solution, the same reduction in potential as above occurred by blowing of nitrogen monoxide thereinto, but the potential did not immediately return to the original value even if blowing of nitrogen monoxide was discontinued and gradually returned to the original value after lapse of about 5 hours. It is considered that this is because when ruthenium is present in the nitric acid solution, nitrato group (-NO₃) which is to be coordinated in a nitrosyl complex of ruthenium is converted to nitro group (-NO₂) by blowing of nitrogen monoxide into the nitric acid solution and the complex in which this nitro group is coordinated is converted to a complex in which nitrato group is coordinated with gradually generating nitrogen monoxide in nitric acid. This conversion rate increases with increase in nitric acid concentration and temperature and hence the effect is not conspicuous in the case of evaporation of nitric acid solution at relatively high temperature under atmospheric pressure. This will be explained with reference to Fig. 2.

For the case where after nitrogen monoxide was blown into 3 N nitric acid solution containing ruthenium used in the above example, the solution was concentrated to 8 N in the evaporation pot used in the above example under reduced pressure while supplying the solution as in the above example and subsequently concentration was continued without supplying solution and for the case where the same operation as above was conducted under normal pressure, dependency of the proportion of nitro group-coordinated nitrosyl ruthenium complex present in nitrosyl ruthenium complex contained in the solution on the concentration of nitric acid in the evaporation pot is shown in Fig. 2 in comparison with the dependency of the proportion of nitro group-coordinated complex in evaporation of solution prepared by dissolving tetranitro nitrosyl ruthenium complex in 8N nitric acid under reduced pressure and normal pressure.

Under the condition of boiling under normal pressure, the nitro group-coordinated nitrosyl ruthenium complex disappeared nearly simultaneously with starting of heating in both the solution in the example and the nitric acid solution of tetranitro nitrosyl ruthenium complex irrespective of nitric acid concentration. However, under the condition of boiling under reduced pressure, about 40% of the complex was nitro group-coordinated complex until the solution of the example was concentrated to 8N in nitric acid concentration. In the case of evaporation and concentration of 8N nitric acid solution to which tetranitro nitrosyl ruthenium complex was added, proportion of the nitro group-coordinated complex linearly decreased with increase in nitric acid concentration.

In this way, conversion rate of the nitro group-coordinated complex to the nitrato group-coordinated complex becomes higher with increase in temperature and under same temperature, it becomes higher with increase in nitric acid concentration. Therefore, the effect of the present invention is not so conspicuous in evaporation treatment at the relatively high boiling point of nitric acid solution under atmospheric pressure.

The reaction of coordination of a nitro group in a nitrosyl complex of ruthenium in nitric acid solution is not a peculiar one caused by blowing nitrogen monoxide into the solution, but generally takes place in the presence of nitrite ion.

As means for allowing nitrite ion to be present, there may be utilized direct addition of water-soluble nitrite or nitrogen oxide and besides indirect action of nitrogen oxide produced by decomposition of nitric acid with addition of elements, ion or organic substances capable of reducing nitric acid or indirect action of nitrogen oxide produced by electrolytic reduction.

Necessary and enough amount of nitrite ion cannot be simply determined because in general ruthenium content in the nitric acid solution cannot necessarily be kept constant, chemical form is not constant and concentrations of nitric acid and coexisting ions are also not constant.

Under the condition of the same nitrite ion concentration, amount of nitro group coordinated in ruthenium nitrosyl complex increases with decrease in concentrations of hydrogen ion and nitrate ion. Therefore, in the case of a supply solution lower in concentrations of hydrogen ion and nitrate ion than concentrated solution in the evaporation apparatus, amount of nitro group which coordinates in ruthenium nitrosyl complex increases. The coordination number of nitro group is up to 4, but is considered to be about 2 in an acidic solution.

As mentioned before, replacement between nitro group and nitrato group is an equilibrium reaction and the time required for reaching the equilibrium is substantially shortened with increase in temperature, but simultaneously equilibrium coordination number of nitro group decreases at higher temperature. Therefore, optimum temperature exists depending on operation conditions.

In the present invention, it is possible to increase the equilibrium coordination number of nitro group by preventing the nitric acid solution from contacting oxygen.

The condition under which the method of the present invention is realized is not the ratio of concentrations of total ruthenium and ruthenium nitrosyl nitro complex, but that the absolute amount of ruthenium nitrosyl nitro complex is more than a certain value, namely, the absolute amount of ruthenium nitrosyl nitro complex is more than a certain value for supplying nitrogen monoxide which is necessary for moderation of the oxidizing atmosphere in the evaporation apparatus which depends on the concentration of nitric acid or nitrate and temperature. Therefore, the higher ruthenium concentration in the supplied nitric acid solution provides a much higher effect. To the contrary, when the ruthenium concentration is extremely low, the concentration of nitro complex in the evaporation apparatus does not reach the necessary level and there is the possibility of a considerably portion of ruthenium in the concentrated solution being volatilized. When the method of the present invention is applied in such a case, the amount of ruthenium volatilized from the evaporation apparatus can be reduced rather by adding ruthenium nitrosyl complex to the supplied nitric acid solution.

According to the present invention, pretreatment of the solution to be evaporated can be carried out utterly irrespective of the system such as in the structure and operation of the body of the evaporation apparatus. Therefore, inhibition of volatilization of ruthenium becomes possible in the evaporation apparatus by easy connection with the idea of the conventional evaporation apparatus. Consequently, ability for removal of radioactivity by an evaporation apparatus increases and besides corrosion of stainless steel constituting the evaporation apparatus decreases, resulting in improvement of the reliability of the plant.

The effect of the present invention can be more effectively attained with increase in concentration of ruthenium. Further, the method of the present invention can provide especially conspicuous effect in combination with an evaporation apparatus which is operated utilizing a low boiling point under reduced pressure.

## Claims

1. A method for evaporation treatment of a ruthenium-containing nitric acid solution (2) which comprises carrying out the evaporation by heating with successively supplying the ruthenium-containing nitric acid solution to be evaporated to an evaporation apparatus wherein a partial or the whole chemical forms of the ruthenium contained in the solution (2) to be evaporated are converted into a nitrosyl complex in which nitro group is coordinated prior to supplying the solution to the evaporation apparatus (9).

2. A method according to claim 1, wherein a partial or the whole chemical forms of ruthenium contained in the solution (2) to be evaporated are converted into the nitrosyl complex in which nitro group is coordinated by adding a substance which has an action to reduce nitric acid into nitrous acid, to the solution (2) to be evaporated before being supplied to the evaporation apparatus (9).

3. A method according to claim 2, wherein as the material having an action to reduce nitric acid into nitrous acid, nitrogen oxide or a nitrite is used.

4. A method according to claim 1, wherein a partial or the whole chemical forms of ruthenium contained in the solution (2) to be evaporated are converted into the nitrosyl complex, in which nitro group is coordinated, by electrically reducing nitric acid to produce nitrous acid.

5. A method according to any one of Claims 1 to 4, wherein a ruthenium concentration of the solution (2) to be evaporated is increased by adding thereto a ruthenium solution higher in concentration than that of the solution (2) to be evaporated, which is supplied to the evaporation apparatus (9), and thereafter, the evaporation treatment of said concentrated solution is conducted.

6. A method according to Claim 5, wherein a partial or the whole chemical forms of ruthenium added to the solution (2) to be evaporated are a nitrosyl complex in which nitro group is coordinated.

7. A method according to any one of Claims 1 to 4, wherein the step of converting a partial or the whole chemical forms of ruthenium contained in the solution (2) to be evaporated into a nitrosyl complex in which nitro group is coordinated, is carried out in a non-oxidizing atmosphere.

8. A method according to Claim 5, wherein the step of converting a partial or the whole chemical forms of ruthenium contained in the solution (2) to be evaporated into a nitrosyl complex in which nitro group is coordinated, is carried out in a non-oxidizing atmosphere.

9. A method according to any one of Claims 1 to 4, wherein the evaporation treatment of the solution (11) to be evaporated in the evaporation apparatus (9) is conducted under a reduced pressure.

10. A method according to Claim 7, wherein the evaporation treatment of the solution (11) to be evaporated in the evaporation apparatus (9) is conducted under a reduced pressure.

## Patentansprüche

1. Verfahren zur Verdampfungsbehandlung einer Ruthenium enthaltenden Salpetersäurelösung (2), das die Durchführung der Verdampfung durch Erhitzen mit nach und nach erfolgender Zufuhr der zu verdampfenden Ruthenium enthaltenden Salpetersäurelösung zu einer Verdampfungsvorrichtung aufweist, in der teilweise oder die sämtlichen chemischen Formen des in der zu verdampfenden Lösung enthaltenen Rutheniums in einen Nitrosylkomplex umgewandelt werden, wobei eine Nitrogruppe vor der Zufuhr der Lösung zur Verdampfungsvorrichtung (9) koordiniert wird.

2. Verfahren nach Anspruch 1, bei dem teilweise oder die sämtlichen chemischen Formen des in der zu verdampfenden Lösung (2) enthaltenen Rutheniums in den Nitrosylkomplex umgewandelt werden, wobei eine Nitrogruppe durch Zusatz eines Stoffes, der eine Wirkung zur Reduktion von Salpetersäure zu salpetriger Säure hat, zu der zu verdampfenden Lösung (2) vor der Zufuhr zur Verdampfungsvorrichtung (9) koordiniert wird.

3. Verfahren nach Anspruch 2, bei dem als das Material mit einer Wirkung zur Reduktion von Salpetersäure zu salpetriger Säure Stickstoffoxid oder ein Nitrit verwendet wird.

4. Verfahren nach Anspruch 1, bei dem teilweise oder die sämtlichen chemischen Formen des in der zu verdampfenden Lösung (2) enthaltenen Rutheniums in den Nitrosylkomplex umgewandelt werden, wobei eine Nitrogruppe durch elektrische Reduktion von Salpetersäure zur Erzeugung salpetriger Säure koordiniert wird.

5. Verfahren nach irgendeinem der Ansprüche 1 bis 4, bei dem eine Rutheniumkonzentration der zu verdampfenden Lösung (2) gesteigert wird, indem man dazu eine Rutheniumlösung höherer Konzentration als der der zu verdampfenden Lösung (2) zusetzt, die der Verdampfungsvorrichtung (9) zugeführt wird, und danach die Verdampfungsbehandlung der konzentrierten Lösung durchgeführt wird.

6. Verfahren nach Anspruch 5, bei dem teilweise oder die sämtlichen chemischen Formen des der zu verdampfenden Lösung (2) zugesetzten Rutheniums ein Nitrosylkomplex sind, wobei eine Nitrogruppe koordiniert ist.

7. Verfahren nach irgendeinem der Ansprüche 1 bis 4, bei dem der Schritt der Umwandlung der teilweisen oder sämtlichen chemischen Formen des in der zu verdampfenden Lösung (2) enthaltenen Rutheniums in einen Nitrosylkomplex, wobei eine Nitrogruppe koordiniert wird, in einer nicht-oxidierenden Atmosphäre durchgeführt wird.

8. Verfahren nach Anspruch 5, bei dem der Schritt der Umwandlung der teilweisen oder sämtlichen chemischen Formen des in der zu verdampfenden Lösung (2) enthaltenen Rutheniums in einen Nitrosylkomplex, wobei eine Nitrogruppe koordiniert wird, in einer nicht-oxidierenden Atmosphäre durchgeführt wird.

9. Verfahren nach irgendeinem der Ansprüche 1 bis 4, bei dem die Verdampfungsbehandlung der zu verdampfenden Lösung (11) in der Verdampfungsvorrichtung (9) unter einem verminderten Druck durchgeführt wird.

10. Verfahren nach Anspruch 7, bei dem die Verdampfungsbehandlung der zu verdampfenden Lösung (11) in der Verdampfungsvorrichtung (9) unter einem verminderten Druck durchgeführt wird.

## Revendications

1. Procédé pour le traitement d'évaporation d'une solution d'acide nitrique contenant du ruthénium (2) qui comprend la mise en oeuvre de l'évaporation par chauffage, avec introduction progressive de la solution d'acide nitrique contenant du ruthénium à faire évaporer dans un appareil d'évaporation dans lequel on transforme une partie ou la totalité des formes chimiques du ruthénium contenu dans la solution (2) à faire évaporer en un complexe nitrosyle dans lequel le groupe nitro est coordiné, avant l'introduction de la solution dans l'appareil d'évaporation (9).

2. Procédé selon la revendication 1, dans lequel on transforme une partie ou la totalité des formes chimiques du ruthénium contenu dans la solution (2) à faire évaporer en le complexe nitrosyle dans lequel le groupe nitro est coordiné, par addition d'une substance capable de réduire l'acide nitrique en acide nitreux, à la solution (2) à faire évaporer, avant son introduction dans l'appareil d'évaporation (9).

3. Procédé selon la revendication 2, dans lequel on utilise comme matériau capable de réduire l'acide nitrique en acide nitreux, l'oxyde d'azote ou un nitrite.

4. Procédé selon la revendication 1, dans lequel on transforme une partie ou la totalité des formes chimiques du ruthénium contenu dans la solution (2) à faire évaporer en le complexe nitrosyle, dans lequel le groupe nitro est coordiné, par réduction électrique de l'acide nitrique pour produire de l'acide nitreux.

5. Procédé selon l'une quelconque des revendications 1 à 4, dans lequel on augmente la concentration du ruthénium dans la solution (2) à faire évaporer, en lui ajoutant une solution de ruthénium plus concentrée que la solution (2) à faire évaporer que l'on introduit dans l'appareil d'évaporation (9), après quoi on met en oeuvre le traitement d'évaporation de ladite solution concentrée.

6. Procédé selon la revendication 5, dans lequel une partie ou la totalité des formes chimiques du ruthénium ajouté à la solution (2) à faire évaporer est un complexe nitrosyle dans lequel le groupe nitro est coordiné.

7. Procédé selon l'une quelconque des revendications 1 à 4, dans lequel on met en oeuvre l'étape de transformation d'une partie ou de la totalité des formes chimiques du ruthénium contenu dans la solution (2) à faire évaporer en un complexe nitrosyle dans lequel le groupe nitro est coordiné, en atmosphère non-oxydante.

8. Procédé selon la revendication 5, dans lequel on met en oeuvre l'étape de transformation d'une partie ou de la totalité des formes chimiques du ruthénium contenu dans la solution (2) à faire évaporer en un complexe nitrosyle dans lequel le groupe nitro est coordiné, en atmosphère non-oxydante.

9. Procédé selon l'une quelconque des revendications 1 à 4, dans lequel on met en oeuvre le traitement d'évaporation de la solution (11) à faire évaporer dans l'appareil d'évaporation (9) sous pression réduite.

10. Procédé selon la revendication 7, dans lequel on met en oeuvre le traitement d'évaporation de la solution (11) à faire évaporer dans l'appareil d'évaporation (9) sous pression réduite.
